# EUROPÄISCHE PATENTANMELDUNG

(11) **EP 4 212 643 A1**
(43) Veröffentlichungstag der Anmeldung: **19.07.2023**
(21) Anmeldenummer: 22151806.1
(22) Anmeldetag: 17.01.2022
(51) Int. Cl.: C22C 38/00, B21C 1/00, B21C 47/00, B23K 11/00, B23K 11/02, B23K 11/087, B23K 11/16, B23K 11/25, B23K 11/30, B23K 11/34, B23K 11/36, B23K 31/02, B23K 31/10, B21C 37/08, B21C 37/083, B23K 35/02, F16L 9/17

(54) **VERFAHREN ZUM HERSTELLEN VON GESCHWEISSTEN ROHREN UND ROHR HERGESTELLT NACH DIESEM VERFAHREN**

(71) Anmelder: Benteler Steel/Tube GmbH, 33104 Paderborn (DE)
(72) Erfinder: Bistron, Marcus, 33102 Paderborn (DE); Hartmann, Ulrich, 33100 Paderborn (DE)
(74) Vertreter: Griepenstroh, Jörg

(57) **Zusammenfassung**

Verfahren zum Herstellen von geschweißten Rohren mit folgenden Schritten:
a. Bereitstellen eines Blechbandes, das zumindest zu 99,5 Gew.% aus Eisen besteht, wobei es maximal 0,5 Gew.-% weitere Legierungselemente einschließlich erschmelzungsbedingter Verunreinigungen aufweist;
b. Abtragen von Verunreinigungen zumindest von Längskanten des Blechbandes;
c. Rollformen des Blechbandes zu einem Schlitzrohr und anschließendes Zuführen des Schlitzrohres zu einer Schweißstation, wobei die Längskanten mittels Widerstandsschweißen miteinander verschweißt werden, so dass ein Rohr entsteht, wobei beim Widerstandsschweißen die Längskanten unter Schutzgas über Kontaktelektroden von einer Gleichspannungsquelle lokal erwärmt werden und ohne Schweißzusatzstoff pressverschweißt werden, wobei ein Zeitfenster zwischen dem Abtragen von Verunreinigungen und dem Schweißen maximal 60 Minuten beträgt, wobei die Wärmeeinflusszone wird nicht breiter ist als das doppelte der Wanddicke des Rohrs eingestellt, wobei die Wanddicke in einem Bereich von 0,4 bis 2 mm liegt, wobei die Abweichung der Wanddicke im Bereich der Schweißnaht und der Wärmeeinflusszone vom übrigen Rohrumfang auf maximal 0,25 mm eingestellt wird;
d. Das geschweißte Schlitzrohr wird durch Kaltziehen zum geschweißten Rohr fertiggeformt, wobei das Kaltziehen mit oder ohne Kalibrierungsschritt insbesondere zeitlich unmittelbar nach dem Schweißen in der Schweißstation oder zeitlich unmittelbar im Anschluss an die Schweißstation erfolgt.

## Beschreibung

Die Erfindung betrifft ein Verfahren zum Herstellen von geschweißten Rohren gemäß den Merkmalen des Patentanspruches 1 sowie ein nach dem Verfahren hergestelltes Rohr gemäß den Merkmalen des Patentanspruches 13.

Die DE 750 660 C offenbart ein Verfahren zur Herstellung von Rohren aus technisch reinem Eisen unter Verwendung einer Presse und bezweckt gegenüber den bis dahin üblichen Verfahren eine wesentliche Zeitersparnis und Vereinfachung sowie Sicherheit in der Durchführung. Das fertige Rohr wird aus einem massiven Ausgangswerkstück erzeugt. Mit einer Verformungsdauer von weniger als 10 Sekunden soll unter Verwendung einer Presse ein Rohr ausreichender Festigkeit erzeugt werden, das weder spröde noch brüchig ist. Bei Temperaturen von 1050°C und mehr werden die Werkzeuge der Presse, insbesondere die Matrize und der Pressdorn außerordentlich hoch beansprucht und schnell verschlissen, so dass man im Allgemeinen nur einen Dorn mit Innenkühlung verwenden kann. Um einen innen gekühlten Dorn die nötige Standfestigkeit zu geben, war man gezwungen, verhältnismäßig große Durchmesser des Dorns in Kauf zu nehmen. Die DE 750 660 C schlägt daher vor, das Verfahren bei Temperaturen unter 1050°C durchzuführen, nämlich bei Temperaturen zwischen 680 C bis 850°C. Die Verformung des Ausgangsblockes zu dem Rohr soll in einem einzigen ununterbrochenen Arbeitsgang, d.h. in zeitlich unmittelbar aufeinanderfolgenden Arbeitsschritten mittels einer hydraulisch wirkenden Strangpresse erfolgen.

Die GB 415 109 offenbart ein Verfahren zur Herstellung von Rohren aus Metall. Ein Metallband wird auf eine Umformtemperatur vorgeheizt und in einem Rollformverfahren zu einem Rohr umgeformt, um in dem umgeformten Zustand in einem zweiten Ofen auf eine Schweißtemperatur erwärmt zu werden. Die einander gegenüberliegenden Schweißkanten werden durch eine Gasflamme erhitzt, gegeneinander gepresst und auf diese Weise verschweißt. Das Verfahren soll sich auch für Rohre aus Reineisen eignen.

Die DE 10 2010 049 792 B4 offenbart ein Verfahren zur Vorrichtung zur Gewinnung von hochreinem Wasserstoff aus einem Pyrolysegas in einem Reaktor, wobei das Pyrolysegas mittels eines Wasserstoffabscheiders mit einer semipermeablen Trennwand aus ferritischem Eisen oder Roheisen oder Reineisen abgeschieden wird. Die Trennwand sollte bestmöglich druckstabil sein.

Die Herstellung nahtloser Rohre aus Reineisenrohr ist aufgrund der schwierigen Temperaturführung vergleichsweise aufwendig. Ferner sind für Rohre aus Reineisen zur Bildung einer semipermeablen Trennwand hohe Sauberkeitsanforderungen zu erfüllen, die nur durch aufwendige Reinigungsprozesse erfüllt werden können. Die gewünschte Dünnwandigkeit des Rohres bei der werkstoffbedingten sehr geringer Materialfestigkeit führt ggf. zu Problemen beim Kaltziehen von nahtlosen Rohren.

Der Erfindung liegt daher die Aufgabe zugrunde, ein Verfahren zur Herstellung eines geschweißten Rohres aus Reineisen (min. 99,5 Gew.-% Fe) aufzuzeigen, das die notwendige Dichtheit, insbesondere für die Verwendung bei medienführenden Rohranwendungen aufweist. Insbesondere liegt der Erfindung die Aufgabe zugrunde, Rohre mit geringem Materialverlust und mit einem über den Umfang möglichst gleichbleibenden Querschnitt und mit gleichbleibenden Materialeigenschaften kostengünstig herzustellen.

Diese Aufgaben werden durch ein Verfahren gemäß Patentanspruch 1 gelöst.

Ferner soll ein Rohr aus Reineisen, insbesondere zur Verwendung bei medienführenden Rohranwendungen aufgezeigt werden, das hohe Dichtigkeitsanforderungen erfüllt.

Diese Aufgabe wird durch ein erfindungsgemäßes Rohr gemäß dem Patentanspruch 13 gelöst.

Die jeweiligen abhängigen Patentansprüche betreffen vorteilhafte Weiterbildungen des Erfindungsgedankens.

Das erfindungsgemäße Verfahren zum Herstellen von geschweißten Rohren umfasst folgenden Schritte:
a. Bereitstellen eines Blechbandes, das zumindest zu 99,5 Gew.-% aus Eisen besteht, wobei es maximal 0,5 Gew.-% weitere Legierungselemente einschließlich erschmelzungsbedingter Verunreinigungen aufweist;
b. Abtragen von Verunreinigungen zumindest von Längskanten des Blechbandes;
c. Rollformen des Blechbandes zu einem Schlitzrohr und anschließendes Zuführen des Schlitzrohres zu einer Schweißstation, wobei die Längskanten mittels Widerstandsschweißen miteinander verschweißt werden, so dass ein umfangsseitig geschlossenes Rohr mit einer Schweißnaht entsteht, wobei beim Widerstandsschweißen die Längskanten unter Schutzgas über Kontaktelektroden von einer Gleichspannungsquelle lokal erwärmt werden und ohne Schweißzusatzstoff pressverschweißt werden, wobei ein Zeitfenster zwischen dem Abtragen von Verunreinigungen und dem Schweißen maximal 60 Minuten beträgt; wobei die Wärmeeinflusszone nicht breiter als das doppelte der Wanddicke des Rohrs eingestellt wird, wobei die Wanddicke in einem Bereich von 0,4 bis 2 mm liegt, und die Abweichung der Wanddicke im Bereich der Schweißnaht und der Wärmeeinflusszone vom übrigen Rohrumfang wird auf maximal 0,25 mm eingestellt wird;
d. Das Rohr wird durch Kaltziehen fertiggeformt, wobei das Kaltziehen mit oder ohne Kalibrierungsschritt insbesondere zeitlich unmittelbar nach dem Schweißen in der Schweißstation oder zeitlich unmittelbar im Anschluss an die Schweißstation erfolgt.

Rohre, die nach diesem Verfahren hergestellt wurden, eigenen sich insbesondere zur Verwendung bei der Wasserstoffseparation, der Wasserstoffreinigung oder bei der Wasserstoffgewinnung. Für die Wasserstoffgewinnung werden Wasserstoffgeneratoren verwendet, bei welchen mehrere dieser Rohre aus Reineisen gebündelt werden. Im Inneren der Rohre fließt ein H₂-haltiges Gas, wie z.B. Methan. Der Prozess wird durch einen Stromimpuls gestartet. Danach tritt durch die Wand des Rohres nahezu reiner Wasserstoff aus. Durch das Anlegen eines Vakuums setzt sich die Wasserstoffgewinnung automatisiert fort. Der Effekt wird als Ferro-Hy-Tunnel bezeichnet. Wichtig für den Prozess ist neben der Dichtheit der Rohre bei Betriebsdrücken von bis zu 20 bar auch eine geringe Verschmutzung der Oberfläche, da diese den Prozess unterbrechen oder den Start verhindern könnte.

Grundsätzlich wäre es zur Herstellung der Rohre möglich, Stäbe aus Vollmaterial aufzubohren, was zu einem hohen Materialverlust führt und vergleichsweise aufwendig ist. Das erfindungsgemäße Verfahren schlägt die Herstellung längsgeschweißter Rohre vor, wobei die Längskanten des Blechbandes vor dem Verschweißen gereinigt werden und anschließend mittels Widerstandsschweißen ohne Schweißzusatzwerkstoff verschweißt werden. Das Zeitfenster zwischen dem Abtragen der Verunreinigungen und dem Schweißen beträgt maximal 60 Minuten, weil das Material sehr leicht korrodiert. Die Schweißparameter werden derart gewählt, dass die Wärmeeinflusszone nicht breiter als das Doppelte der Wanddicke des geschweißten Rohres eingestellt wird, wobei die Wanddicke in einem Bereich von 0,4 bis 2 mm liegt. Die Abweichung der Wanddicke vom übrigen Rohrumfang wird im Bereich der Schweißnaht auf vorzugsweise maximal 0,25 mm eingestellt. Das so längsgeschweißte Rohr wird durch Kaltziehen fertig geformt, wobei das Kaltziehen mit oder ohne Kalibrierungsschritt, insbesondere zeitlich unmittelbar nach dem Schweißen in der Schweißstation oder in zeitlich unmittelbarem Anschluss an die Schweißstation erfolgt.

Das erfindungsgemäße Verfahren ermöglicht die Herstellung von Rohren mit besonders reiner Oberfläche. Durch die Wahl des Schweißverfahrens und die schnelle Bearbeitungsfolge wird die Reinheit im Bereich der Schweißnaht erhalten.

Um eine besonders reine Oberfläche zu erreichen, werden für das Verfahren nicht nur die Bandkanten gereinigt, sondern ggf. auch die angrenzenden Flächen, beispielsweise durch mechanische Abstreifer. Zur Verdrängung des Luftsauerstoffes wird vorzugsweise bereits vor dem Schweißen ein Schutzgas in das Schlitzrohr eingeleitet. Auch dadurch kann die spätere Dichtheit der Schweißverbindung durch maximale Porenfreiheit gewährleistet werden.

Es wird angestrebt, dass in der Schweißnaht der Flächenanteil an Verunreinigungen maximal 0,1% beträgt. Auch soll der Flächenanteil an Lufteinschlüssen in der Schweißnaht maximal 0,1% der Fläche der Schweißnaht betragen, so dass bei einem Heliumlecktest am fertig geschweißten und mindestens 250 m langen Rohrstrang kein Leck detektierbar ist.

Das Rollformen des Blechbandes erfolgt bevorzugt ohne Wärmezufuhr. Dadurch wird eine Verzunderung der Oberfläche und insbesondere der Längskanten des Blechbandes vermieden sowie der Energieverbrauch zur Herstellung niedrig gehalten.

Die Längskanten werden vor dem Schweißen insbesondere derart geführt, dass sie im Wesentlichen druckfrei aneinander anliegen. Dadurch wird erreicht, dass eine sehr homogene Schweißnaht mit sowohl gleichmäßiger Breite als auch Dicke entsteht und das Auftreten von Schweißfehlern zuverlässig vermieden.

Die mittlere Härte in der Wärmeeinflusszone der Schweißnaht soll um maximal 15%, bevorzugt maximal 10% gegenüber der mittleren Härte außerhalb der Wärmeinflusszone reduziert werden. Vorzugsweise besitzt das fertige normalisierte Rohr bei Raumtemperatur eine Dehngrenze Rp0.2 von mindestens 100 MPa, eine Zugfestigkeit Rm von mindestens 200 MPa und eine Bruchdehnung A5 von mindestens 30%. Das geschweißte Rohr wurde nachträglich kaltgezogen und bevorzugt normalisiert. Das Normalisieren nach dem Kaltziehen erfolgt insbesondere durch Erhitzen auf eine Ausgangstemperatur von 700 bis 1.000°C, insbesondere 800°C bis 920°C, bevorzugt mindestens 850°C für mindestens 15 Sekunden. Das anschließende Abkühlen erfolgt bevorzugt unter gezielter Anströmung mit Schutzgas. Das Normalisieren reduziert Spannungen des Rohrs.

Insbesondere wird zur Herstellung der geschweißten Rohre Reineisen mit folgender Zusammensetzung in Gew.-% verwendet: C max. 0,015, Mn max. 0,15, P max. 0,008, S max. 0,006, N max. 0,01, Cu max. 0,05, Sn max. 0,004, Rest Eisen und erschmelzungsbedingte Verunreinigungen.

Abschließend wird das Rohr bevorzugt aufgecoilt, und einer Heliumleckprüfung unterzogen. Das durch die Heliumleckprüfung noch mit Helium gefüllte Rohr wird für den Transport geschlossen, so dass das Helium im Rohr verbleibt. Dadurch wird die Oberflächenreinheit des Rohres sichergestellt.

Das Ergebnis des erfindungsgemäßen Verfahrens ist ein Rohr aus Reineisen, wobei die Summe weiterer Legierungsbestandteile einschließlich erschmelzungsbedingter Verunreinigungen maximal 0,5 Gew.-% beträgt. Das Rohr wird aus einem umgeformten Blechband durch Widerstandsschweißen einer Längsnaht unter einer Schutzgasatmosphäre hergestellt. Das Rohr besitzt eine Schweißnaht und eine die Schweißnaht beidseitig begrenzende Wärmeeinflusszone, wobei die Wanddicke des Rohres im Bereich der Schweißnaht und der Wärmeeinflusszone über den Rohrumfang betrachtet um maximal 0,25 mm schwankt. Die Wärmeeinflusszone ist nicht breiter als das Doppelte der Wanddicke. Die Wanddicke liegt zwischen 0,4 bis 2 mm, bei Außendurchmessern des Rohres von 3 bis 20 mm.

Durch das erfindungsgemäße Verfahren wird insbesondere ein Rohr hergestellt, das in der Schweißnaht einen Flächenanteil von Verunreinigungen von maximal 0,1% aufweist, wobei ein Flächenanteil von Lufteinschlüssen maximal 0,1% beträgt, so dass bei einem Heliumlecktest gemäß DIN EN 1779:1999-10 am fertiggeschweißten Rohr auf mindestens 250 m Länge kein Leck detektierbar ist.

Bei einem solchen Rohr ist insbesondere vorgesehen, dass die Härte im Bereich der Wärmeeinflusszone vor und nach einem optionalen Kaltziehschritt um maximal 15%, bevorzugt maximal 10% gegenüber den Rohrabschnitten außerhalb der Wärmeeinflusszone verringert ist. Ein solches Rohr wird insbesondere als semipermeables Leitungsrohr für die Wasserstoffgewinnung aus einem H₂-haltigen Gas oder für die Wasserstoffseparation oder für die Wasserstoffreinigung verwendet.

Ein solches Rohr erfüllt hinsichtlich der Reinheit der Oberflächen, insbesondere die Anforderung, dass die löslichen Rückstände maximal 40 mg je Quadratmeter betragen und die festen, abschirmbaren Rückstände maximal 60 mg je Quadratmeter. Diese Rohre sind insbesondere geeignet zum Transport von Gasen, z.B. Pyrolysegasen oder wasserstoffhaltigen Gasen für spezielle Anwendungen. Sie sind ebenso geeignet zum Transport von aggressiven Medien, da sie eine bessere Beständigkeit z.B. gegen Säuren aufweisen als Kohlenstoffstahl. Reineisenrohre weisen eine sehr gute Magnetisierbarkeit auf. Die erfindungsgemäßen Rohre besitzen eine sehr gleichmäßige Wanddickenverteilung, insbesondere eine geringe Wanddickenreduktion neben dem Bereich der Schweißnaht durch den möglichst geringen Stauchdruck der Schweißflächen vor dem Schweißen. Die gleichmäßige Wanddickenverteilung ist ausgesprochen vorteilhaft bei der Verwendung derartiger Rohre für die Wasserstoffgewinnung im Zusammenhang mit dem Ferro-Hy-TunnelEffekt. Die Rohre eignen sich auch als stromführende Leiter, ggf. für Spulen, Elektromagnete oder auch für Leiterschienen. Die Rohre können in oder als magnetische Abschirmung oder Dauermagnete verwendet werden. Die Rohre können zudem mit Zusatzwerkstoffen gefüllt und als Schweißdraht verwendet werden.

In einem Ausführungsbeispiel eines Verfahrens zur Herstellung von Reineisenrohren mit Außendurchmessern von 3 bis 20 mm bei Wanddicken von 0,4 bis 2 mm werden zunächst die für den Verrohrungsprozess notwendigen Eigenschaften des Bandmaterials durch eine Kombination aus Glühen und Kaltwalzen erstellt. Ist das hergestellte Bandmaterial zu weich, treten ebenso Probleme bei nachfolgenden Fertigungsschritten auf, wie bei zu festen Werkstoffen, da dann ggf. keine hinreichende Dehnung mehr möglich ist. Das so eingestellte Blechband wird anschließend in einen Bandspeicher eingefahren. Zur Weiterverarbeitung wird die Oberfläche des Blechbandes durch Abstreifer einer Vorreinigung unterzogen, um die Oberflächensauberkeit grundsätzlich zu erhöhen. Anschließend wird die Bandoberfläche unter einem hohen Druck abgeblasen. Aus Schallschutzgründen erfolgt dieser Vorgang insbesondere in einer Schallschutzkabine. Hierdurch wird die Oberflächensauberkeit nochmals erhöht. Anschließend werden die Bandkanten bearbeitet. Beide Bandkanten werden ca. 5% besäumt, um saubere Schweißflächen zu erhalten. Das Besäumen erfolgt zeitlich direkt vor dem Schweißprozess zur Gewährung einer guten Schweißbarkeit des schnell oxidierenden Materials. Danach erfolgen das Verschweißen, das Kaltziehen und schließlich das Normalisieren. Mit einer Leckprüfung und dem anschließenden aufcoilen der mit Helium gefüllten Rohre schließt das Verfahren ab.

## Patentansprüche

1. Verfahren zum Herstellen von geschweißten Rohren mit folgenden Schritten:
a. Bereitstellen eines Blechbandes, das zumindest zu 99,5 Gew.% aus Eisen besteht, wobei es maximal 0,5Gew.-% weitere Legierungselemente einschließlich erschmelzungsbedingter Verunreinigungen aufweist;
b. Abtragen von Verunreinigungen zumindest von Längskanten des Blechbandes;
c. Rollformen des Blechbandes zu einem Schlitzrohr und anschließendes Zuführen des Schlitzrohres zu einer Schweißstation, wobei die Längskanten mittels Widerstandsschweißen miteinander verschweißt werden, so dass ein umfangsseitig geschlossenes Rohr mit einer Schweißnaht entsteht, wobei beim Widerstandsschweißen die Längskanten unter Schutzgas über Kontaktelektroden von einer Gleichspannungsquelle lokal erwärmt werden und ohne Schweißzusatzstoff pressverschweißt werden, wobei ein Zeitfenster zwischen dem Abtragen von Verunreinigungen und dem Schweißen maximal 60 Minuten beträgt, wobei die Wärmeeinflusszone nicht breiter ist als das Doppelte der Wanddicke des Rohrs eingestellt wird, wobei die Wanddicke in einem Bereich von 0,4 bis 2 mm liegt, wobei die Abweichung der Wanddicke im Bereich der Schweißnaht und der Wärmeeinflusszone vom übrigen Rohrumfang auf maximal 0,25 mm eingestellt wird;
d. Das Rohr wird durch Kaltziehen fertiggeformt, wobei das Kaltziehen mit oder ohne Kalibrierungsschritt insbesondere zeitlich unmittelbar nach dem Schweißen in der Schweißstation oder zeitlich unmittelbar im Anschluss an die Schweißstation erfolgt.

2. Verfahren nach Anspruch 1, **dadurch gekennzeichnet, dass** folgende Schweißparameter für das Widerstandsschweißen gewählt werden:
Schweißgeschwindigkeit: min. 10 m/min
Kantenstaudruck: min. 1000 N

3. Verfahren nach Anspruch 1 oder 2, **dadurch gekennzeichnet, dass** vor den Schweißen ein Schutzgas in das Schlitzohr eingeleitet wird.

4. Verfahren nach einem der Ansprüche 1 bis 3, **dadurch gekennzeichnet, dass** das Rollformen ohne Wärmezufuhr erfolgt.

5. Verfahren nach einem der Ansprüche 1 bis 4, **dadurch gekennzeichnet, dass** die Längskanten vor dem Schweißen derart geführt werden, dass sie im Wesentlichen druckfrei aneinander anliegen.

6. Verfahren nach einem der Ansprüche 1 bis 5, **dadurch gekennzeichnet, dass** durch das Schweißen eine mittlere Härte in der Wärmeeinflusszone der Schweißnaht um maximal 15%, bevorzugt maximal 10% gegenüber der mittleren Härte außerhalb der Wärmeinflusszone reduziert wird.

7. Verfahren nach einem der Ansprüche 1 bis 6, **dadurch gekennzeichnet, dass** Rohr bei Raumtemperatur eine Dehngrenze Rp0.2 von mindestens 100 MPa, eine Zugfestigkeit Rm von mindestens 200 MPa und eine Bruchdehnung A5 von mindestens 30% aufweist.

8. Verfahren einem der Ansprüche 1 bis 7, **dadurch gekennzeichnet, dass** zur Herstellung des Rohres Reineisen mit folgender Zusammensetzung in Gew.-% verwendet wird,
| | |
|---|---|
| C | max. 0,015 |
| Mn | max. 0,15 |
| P | max. 0,008 |
| S | max. 0,006 |
| N | max. 0,01 |
| Cu | max. 0,05 |
| Sn | max. 0,004 |
Rest Eisen und erschmelzungsbedingte Verunreinigungen.

9. Verfahren nach einem der Ansprüche 1 bis 8, **dadurch gekennzeichnet, dass** das kaltgezogene Rohr bei einer Temperatur von 700 bis 1000 °C für wenigstens 15 Sekunden normalisiert wird.

10. Verfahren nach einem der Ansprüche 1 bis 8, **dadurch gekennzeichnet, dass** das kaltgezogene Rohr bei einer Temperatur von 800 bis 920 °C für wenigstens 15 Sekunden normalisiert wird.

11. Verfahren nach Anspruch 9 oder 10, **dadurch gekennzeichnet, dass** das normalisierte Rohr in einer Kühlstrecke eines Normalisierungsofens unter gezielter Anströmung mit Schutzgas abgekühlt wird.

12. Verfahren nach einem der Ansprüche 1 bis 11, **dadurch gekennzeichnet, dass** das Rohr aufgecoilt wird und einer Heliumleckprüfung unterzogen wird, wobei nach der Heliumleckprüfung das mit Helium gefüllte Rohr für den Transport verschlossen wird.

13. Rohr aus Reineisen hergestellt nach dem Verfahren nach einem der Ansprüche 1 bis 11, **dadurch gekennzeichnet, dass** die Summe weitere Legierungsbestandteile einschließlich erschmelzungsbedingte Verunreinigungen maximal 0,5 Gew.-% beträgt, wobei das Rohr aus einem umgeformten Blechband durch Längsnahtschweißen mittels Widerstandschweißen unter einer Schutzgasatmosphäre hergestellt ist, wobei das Rohr eine Schweißnaht und eine die Schweißnaht beidseitig begrenzende Wärmeeinflusszone aufweist, wobei eine Wanddicke des Rohrs im Bereich der Schweißnaht und der Wärmeeinflusszone über den Rohrumfang betrachtet um maximal 0,25 mm schwankt und wobei die Wärmeeinflusszone nicht breiter ist als das Doppelte der Wanddicke ist, wobei die Wanddicke WD zwischen 0,2 bis 4 mm liegt bei Außendurchmessern des Rohrs von 3 bis 20 mm.

14. Rohr nach Anspruch 13, **dadurch gekennzeichnet, dass** in der Schweißnaht ein Flächenanteil von Verunreinigungen maximal 0,1% beträgt und ein Flächenanteil von Lufteinschlüssen maximal 0,1% beträgt, so dass bei einem Heliumlecktest gemäß DIN EN 1779:1999-10 am fertig geschweißten Rohr auf mindestens 250 m Länge kein Leck detektierbar ist.

15. Rohr nach Anspruch 13 oder 14, **dadurch gekennzeichnet, dass** die Härte im Bereich der Wärmeeinflusszone vor und nach einem optionalen Kaltziehschritt um maximal 15%, bevorzugt maximal 10% gegenüber den Rohrabschnitten außerhalb der Wärmeeinflusszone verringert ist.

16. Verwendung eines Rohrs nach einem der Ansprüche 13 bis 15 als semipermeables Leitungsrohr für die Wasserstoffgewinnung aus einem H₂-haltigen Gas oder für die Wasserstoffseparation oder Wasserstoffreinigung.
